**Europäisches Patentamt**

**European Patent Office**

**Office européen des brevets**

(19)

(11) Veröffentlichungsnummer : **0 350 897 B1**

(12)

# EUROPÄISCHE PATENTSCHRIFT

(45) Veröffentlichungstag der Patentschrift :
**21.10.92 Patentblatt 92/43**

(51) Int. Cl.⁵ : **B60N 3/00, A47C 7/70**

(21) Anmeldenummer : **89112765.6**

(22) Anmeldetag : **12.07.89**

(54) **Klapptisch.**

(30) Priorität : **13.07.88 DE 8809005 U**

(43) Veröffentlichungstag der Anmeldung :
**17.01.90 Patentblatt 90/03**

(45) Bekanntmachung des Hinweises auf die
Patenterteilung :
**21.10.92 Patentblatt 92/43**

(84) Benannte Vertragsstaaten :
**AT BE CH DE ES FR GB GR IT LI LU NL SE**

(56) Entgegenhaltungen :
**DE-A- 3 329 865**
**US-A- 1 965 788**
**US-A- 2 050 951**
**US-A- 2 597 330**
**US-A- 3 804 031**

(73) Patentinhaber : **Karl Kässbohrer**
**Fahrzeugwerke GmbH**
**Kässbohrerstrasse 13 Postfach 2660**
**W-7900 Ulm (Donau) (DE)**

(72) Erfinder : **Kauer, Kurt**
**Biberacher Strasse 12**
**W-7900 Ulm (DE)**

(74) Vertreter : **Patentanwälte Grünecker,**
**Kinkeldey, Stockmair & Partner**
**Maximilianstrasse 58**
**W-8000 München 22 (DE)**

## Beschreibung

Die Erfindung betrifft einen Klapptisch für Fahrzeugsessel, insbesondere Omnibussessel, mit einer seitlich neben dem Sessel am Sesselgestell befestigten Halterung, mit einem Träger, der in einer im wesentlichen vertikalen Ebene zwischen einer abgesenkten Außerbetriebsstellung und einer angehobenen Betriebsstellung bewegbar an der Halterung angeordnet ist, und mit einer am Träger bewegbar angeordneten Schwenkachse, auf der wenigstens ein Tischelement zwischen einer eingeschwenkten und einer ausgeschwenkten Stellung schwenkbar gelagert ist.

Aus der DE-A 33 29 865 ist ein derartiger, zwischen den Sitzen eines Omnibus-Doppelsitzes angeordneter Klapptisch bekannt, dessen Halterung als vertikaler Flanschträger im vorderen Randbereich der Sitzflächen der Sessel angeordnet ist. Der Träger ist als Trägerstab ausgebildet und mit seinem unteren Ende über ein erstes Gelenk mit einem Schwenkbereich von ungefähr 90° am oberen Ende des vertikalen Flanschträgers in etwa halber Höhe der Sitzflächen der Sessel angelenkt. Mit seinem oberen Ende greift der Trägerstab mittels eines zweiten Gelenkes mit einem Schwenkbereich von ungefähr 180° mittig an der zwei Tischelemente tragenden Schwenkachse an.

In der abgesenkten Außerbetriebsstellung verläuft der Trägerstab gegenüber dem vertikalen Flanschträger abgewinkelt im wesentlichen horizontal nach rückwärts in Richtung der Rücklehnen der Sessel. Die Schwenkachse ist gegenüber dem Trägerstab vertikal nach unten hängend angeordnet, wobei sich die zusammengefalteten oder eingeschwenkten Tischelemente in der von dem Flanschträger, dem Trägerstab und der Schwenkachse begrenzten Ebene befinden. Hierbei ist nachteilig, daß die Tischelemente ungeschützt zwischen den Sesseln angeordnet sind und relativ schnell verschmutzen. Ferner beansprucht der abgesenkte Klapptisch nahezu den gesamten Raum in Höhe und Länge zwischen den Sitzen. Außerdem weisen die Tischelemente in ihren der Schwenkachse zugewandten Randbereichen eine ihre verfügbare Tischfläche reduzierende geringere Breite auf, um in der abgesenkten Außerbetriebsstellung nicht mit einem Querträger des Sesselgestells zu kollidieren. Weiterhin ist die Konstruktion mit zwei Gelenken vergleichsweise aufwendig. Überdies ist die Handhabung des bekannten Klapptisches umständlich.

Um denselben aus der abgesenkten Außerbetriebsstellung in die angehobene Betriebsstellung zu überführen, wird zuerst der Trägerstab um das erste Gelenk um 90° nach oben und vorwärts in eine vertikale Position verschwenkt, in der die Schwenkachse mit daran nach unten hängend eingeschwenkten Tischelementen von dem Trägerstab aus horizontal nach rückwärts verläuft. Dabei muß der Benutzer darauf achten, daß der Trägerstab infolge des Gewichts der Schwenkachse und der Tischelemente nicht wieder in die Ausgangsstellung zurückkippt. Sodann wird die Schwenkachse mit den zusammengefalteten Tischelementen um 180° um das zweite Gelenk nach vorwärts auf die vordere Seite des Trägerstabs verschwenkt. Der Schwenkbogen ist, da sein Radius der Länge der Tischelemente entspricht, vergleichsweise groß. Der Benutzer muß bei dieser Verschwenkbewegung die Tischelemente, wenn sie bis etwa zum Scheitelpunkt des Schwenkbogens verschwenkt worden sind, zusammenhalten, da sie anderenfalls auseinanderklappen und dabei beschädigt werden können. Wenn die Schwenkachse ihre endgültige Position vor dem Trägerstab erreicht hat, können die Tischelemente in die ausgeschwenkte Benutzungsstellung auseinandergefaltet werden. Das Überführen des Klapptisches zurück in die abgesenkte Außerbetriebsstellung erfolgt in umgekehrter Reihenfolge in gleich umständlicher Weise.

Es ist Aufgabe der Erfindung, den Klapptisch der eingangs genannten Art in konstruktiv einfacher Weise so weiterzuentwickeln, daß er bei geringerer Verschmutzungsgefahr leichter handhabbar ist.

Dies wird erfindungsgemäß dadurch erreicht, daß die Halterung als eine stationäre vertikale Führung und der Träger als ein das Tischelement zumindest seitlich umfassender in der Führung zwischen der Betriebs- und der Außerbetriebsstellung teleskopisch verschiebbarer Rahmen ausgebildet ist, in welchem die Schwenkachse im wesentlichen horizontal verlaufend zwischen einer abgesenkten Außerbetriebsstellung und einer angehobenen Betriebsstellung längs einer im wesentlichen vertikalen Ebene verschiebbar geführt ist.

Die Schwenkachse ist mitsamt den Tischelementen in ihrer abgesenkten Außerbetriebsstellung im Gehäuse angeordnet und somit weitgehend vor Verschmutzungen geschützt. Anstelle zweier konstruktiv aufwendiger Gelenke finden zwei einfache Führungen Verwendung. Die Handhabung des erfindungsgemäßen Klapptisches ist sehr einfach. Dazu werden die eingeschwenkt innerhalb des Rahmen angeordneten, vorzugsweise etwas über dessen oberen Rand hinausragenden Tischelemente, erfaßt und einfach so weit nach oben gezogen, bis der Rahmen und die Schwenkachse in der angehobenen Betriebsstellung angeordnet sind. Es ist dann nur noch erforderlich, die Tischelemente in ihre ausgeschwenkte Benutzerstellung zu verschwenken. Das Überführen des erfindungsgemäßen Klapptisches in die abgesenkte Außerbetriebsstellung erfolgt mit umgekehrter Reihenfolge in gleich einfacher Weise.

Vorzugsweise ist der Rahmen als zwei Führungsplatten und zwei Führungsleisten umfassendes Gehäuse ausgebildet. Dabei kann die stationäre Führung zwei Führungselemente aufweisen, die jeweils in eine äußere Führungsnut in den Führungsleisten eingreifen.

Vorzugweise sind die Führungsleisten mit je einer inneren Führungsnut zur Führung je eines, an je einem Ende der Schwenkachse befestigen Gleitsteins versehen. Gemäß einer Weiterbildung der Erfindung weisen die Führungsleisten an ihren oberen Enden je einen Kopf auf, der die inneren und die äußeren Führungsnuten unter Eildung einer inneren bzw. äußeren Anschlagsfläche für die Schwenkachse bzw. für das Gehäuse begrenzt. Dabei können die oberen Randflächen der Führungselemente als Gegenanschlagsflächen für die äußeren Anschlagsflächen ausgebildet sein. Günstig ist eine Ausbildung, gemäß welcher am unteren Ende der Führungsplatten ein Anschlag für die Schwenkachse angeordnet ist.

Zur spielfreien Führung des Tischelementes an den Führungsplatten kann ein Bügel vorgesehen sein. Vorzugsweise ist der Bügel am Tischelement befestigt. Gemäß einer Weiterbildung der Erfindung weist das Tischelement wenigstens eine durchgehende Aufnahmeöffnung zur Aufnahme eines Behälters auf. Dabei kann der Bügel als Schwenkbügel ausgebildet sein, der von einer dem Tischelement nahen, eingeschwenkten Stellung in eine ausgeschwenkte Stellung unterhalb der Aufnahmeöffnung zum Abstützen des Behälters verschwenkbar ist.

Vorzugsweise ist das Tischelement mittels einer Lagerbuchse an der Schwenkachse gelagert. Dabei kann die Lagerbuchse auf ihrer Gesamtlänge einen Schlitz aufweisen, dessen Breite etwas kleiner ist als der Durchmesser der Schwenkachse. Außerdem kann die Lagerbuchse elastisch ausgebildet sein, so daß sie vor Bechädigungen geschützt ist.

Gemäß einer Weiterbildung der Erfindung sind zwei Tischelemente an der Schwenkachse gelagert. Günstig ist eine Ausbildung, gemäß welcher die Lagerbuchsen beider Tischelemente in Form mehrerer Fingerelemente ausgebildet sind, die abwechselnd nebeneinander auf der Schwenkachse angeordnet sind. Dabei kann die Breite der Fingerelemente beider Tischelemente, gemessen in Längsrichtung der Schwenkachse, im wesentlichen deren halben Länge entsprechen. Vorzugsweise ist das Tischelement auf der Schwenkachse verschiebbar angeordnet, wobei die Verschiebung von einer benutzernahen, der Rücklehne des Sessel zugewandten Position in eine benutzerferne Position möglich ist.

Gemäß einer Weiterbildung der Erfindung ist der jeweils obere Rand der Führungsplatten als Auflager für die ausgeschwenkten Tischelemente ausgebildet, welches gleichzeitig durch Reibschluß mit den Tischelementen ein ungewolltes Verschieben derselben aus ihrer benutzerfernen oder benutzernahen Position verhindert.

Zum besseren Einschieben der Tischelemente in das Gehäuse sind die oberen Ränder der Führungsplatten vorzugsweise über je eine Einlaufschräge für die Tischelemente mit der Führungsplatten-Innenfläche verbunden.

Die stationäre Führung kann in Höhe der Sitzfläche der Sessel angeordnet sein.

Vorteilhafterweise ist das Gehäuse in der angehobenen Betriebsstellung mittels eines in eine Arretieröffnung in einer Führungsleiste eingereifenden Arretierhebels arretiert. Dabei kann der Arretierhebel an dem der Rücklehne des Sessels zugewandten rückwärtigen Führungslement angebracht sein.

Vorzugsweise ist das rückwärtige Führungselement mittels einer Bügelhalterung an einer Querachse des Sesselgestells befestigt. Das der Rückenlehne des Sessels abgewandte vordere Führungselement kann mittels einer Trägeranordnung an einem Flansch des Sesselgestells befestigt sein.

Nachstehend ist die Erfindung anhand eines bevorzugten Ausführungsbeispiels unter Bezugnahme auf die beigefügte Zeichnung näher beschrieben. Es zeigen:

Fig.1 eine Draufsicht auf den erfindungsgemäßen Klapptisch in seiner Betriebsstellung,

Fig.2 einen Teilschnitt entlang der Linie II-II in Fig. 1,

Fig.3 eine Schnittdarstellung entsprechend Fig. 2 mit dem in der Außerbetriebsstellung befindlichen Klapptisch, und

Fig.4 eine teilgeschnittene Seitenansicht des Klapptisches bei Betrachtung von rechts in Fig. 1.

Der erfindungsgemäße Klapptisch im hier gezeigten Ausführungsbeispiel ist zwischen den Sesseln eines Omnibus-Doppelsitzes in einer vertikalen Ebene angeordnet. Jeder Sessel ist schematisch durch seine Rückenlehne 1, seine Sitzfläche 2 sowie sein Sesselgestell 3 dargestellt.

Der Klapptisch umfaßt eine am Sesselgestell 3 befestigte statinäre Führung, ein darin vertikal verschiebbares Gehäuse, eine im Gehäuse verschiebbare Schwenkachse 4 mit im wesentlichen horizontalen Verlauf und zwei daran schwenkbar befestigte Tischelemente 5.

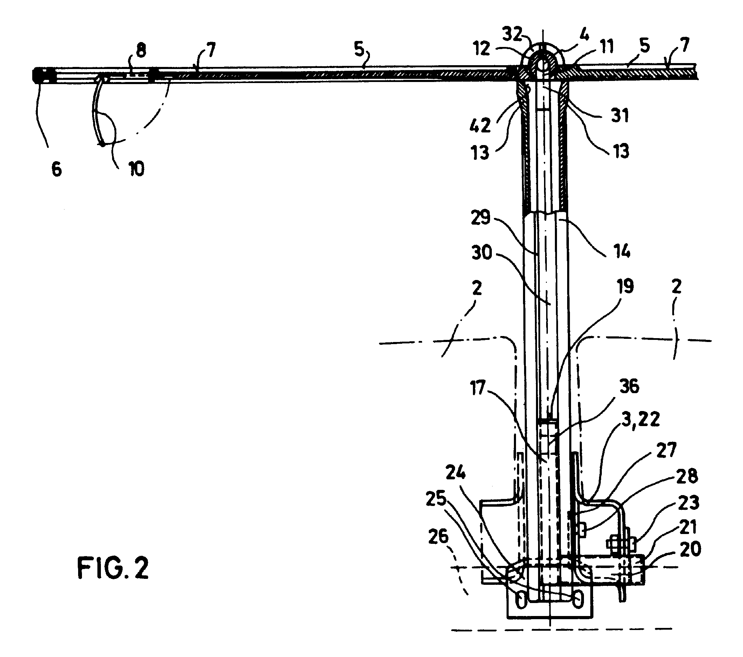

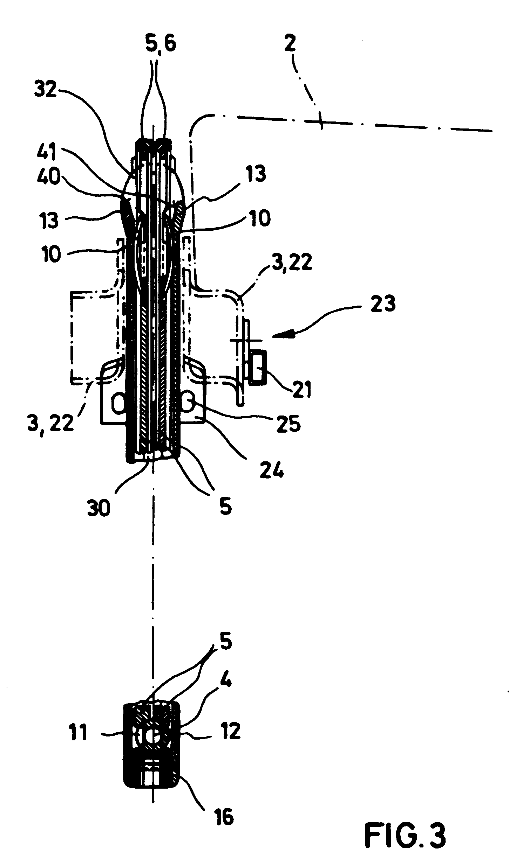

Die Tischelemente 5 sind von rechteckiger Form und umfassen je eine von einem verdickten Rand 6 umgebene Tischfläche 7, die in dem der Schwenkachse 4 abgewandten Endbereich zwei durchgehende Aufnahmeöfnungen 8 für Behälter 9, z.B. einen Trinkbecher und eine Flasche, aufweist. An der Unterseite jedes Tischelementes 5 ist ein Schwenkbügel 10 beidseits der größeren Aufnahmeöffnung 8 von einer dem Tischelement 5 nahen, eingeschwenkten Stellung (siehe Fig. 3) in eine ausgeschwenkte Stellung (siehe Fig. 2) und zurück schwenkbar gelagert. In letzterer Stellung dient der Schwenkbügel 10 zur Abstützung des in der zugeordneten Aufnahmeöffnung 8 einsitzenden Behälters, wenn dieser eine zylindrische Form aufweist.

Die Tischelemente 5 sind an ihrer schmalen Seite mittels je einer auf ihrer Gesamtlänge mit einem Schlitz 11 versehenen Lagerbuchse an der Schwenkachse 4 gelagert. Die Schlitzbreite ist etwas kleiner als der Durchmesser der Schwenkachse 4 und die Lagerbuchse selbst ist elastisch, so daß sich die Tischelemente 5 bei Überlastung von der Schwenkachse 4 lösen können. Somit ist die Lagerung der Tischelemente 5 vor Zerstörung geschützt.

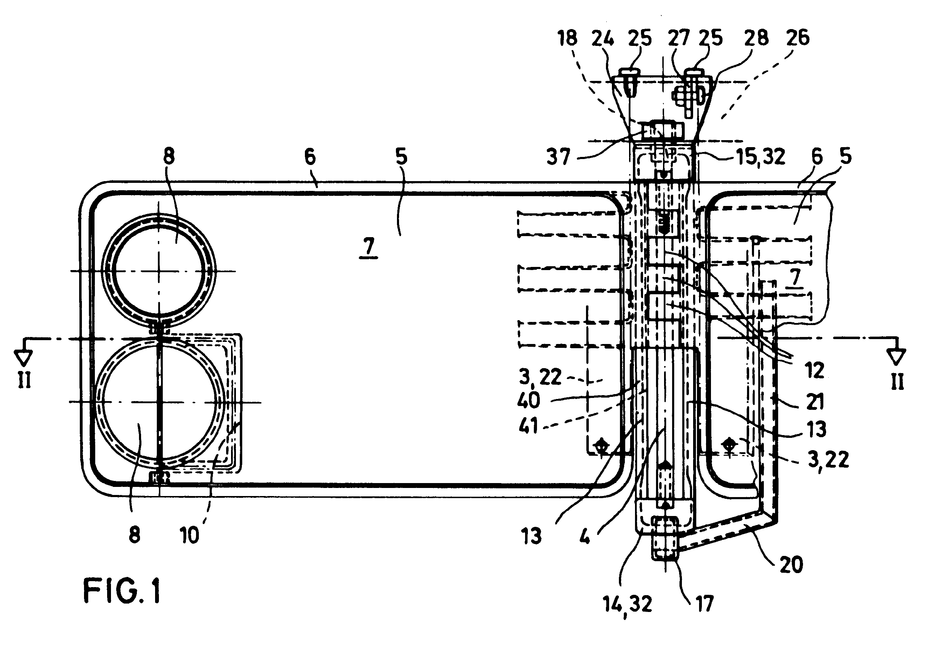

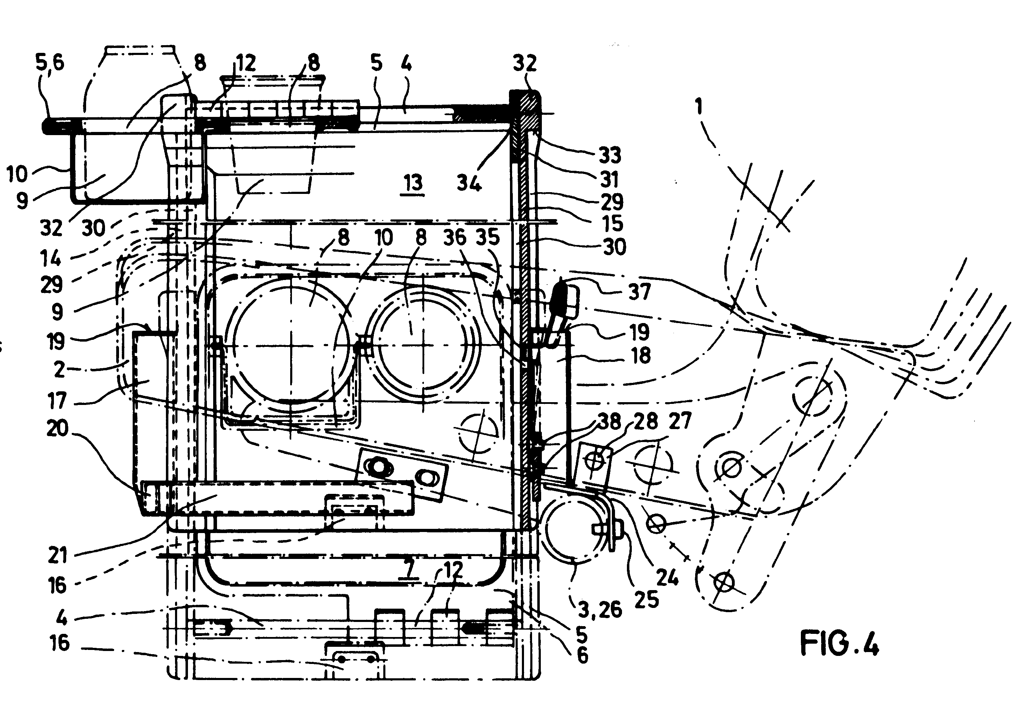

Jede Lagerbuchse besteht aus mehreren Fingerelementen 12, die abwechselnd nebeneinander auf der Schwenkachse 4 angeordnet sind, wie dies in Fig. 1 zu erkennen ist. Hierbei entspricht die Breite der beiden Lagerbuchsen, d.h. sämtlicher Fingerelemente 12 beider Tischelemente 5, gemessen in Längsrichtung der Schwenkachse 4, im wesntlichen deren halben Länge. Auf diese Weise ist es möglich, die Tischelemente 5 auf der Schwenkachse 4 von der in Fig. 1 gezeigten, benutzernahen Stellung in die in Fig. 4 dargestellte benutzerferne Stellung und zurück zu verschieben.

Das in vertikaler Ebene angeordnete Gehäuse umfaßt zwei von den vorderen Randbereichen der Sitzflächen 2 in Richtung der Rückenlehnen 1 der beidseitig benachbarten Sessel verlaufende Führungsplatten 13 und zwar ebenfalls vertikal verlaufende schmale Führungsleisten, die durch die Führungsplatten 13 miteinander verbunden sind. Die im vorderen Randbereich der Sitzflächen 2 angeordnete vordere Führungsleiste ist mit dem Bezugszeichen 14 und die im Bereich der Rückenlehnen 1 befindliche rückwärtige Führungsleiste mit dem Bezugszeichen 15 versehen. Die Führungsplatten 13 sind mit einem gegenseitigen Abstand parallel zueinander angebracht, der etwas größer ist als die größte Dicke, d.h. die Dicke des Randes 6, der Tischelemente 5. Der Abstand zwischen beiden Führungsleisten 14, 15 entspricht etwa der Breite jedes Tischelementes 5, gemessen in horizontaler Richtung. Am unteren Ende der Führungsplatten 13 ist zwischen und auf etwa halber Breite derselben ein Anschlag 16 für die Schwenkachse 4 angeordnet.

Die stationäre Führung umfaßt ein vorderes Führungselement 17 und ein rückwärtiges Führungselement 18, die beide vertikal verlaufend der vorderen Führungsleiste 15 bzw. der rückwärtigen Führungsleiste 15 des Gehäuses zu dessen Verschiebung in vertikaler Ebene zugeordnet sind. Beide Führungselemente 17, 18 weisen je eine im wesentlichen der Dicke der Sitzfläche 2 entsprechende Länge, gemessen in vertikaler Richtung, auf und sind mit ihren oberen Randbereichen 19 unterhalb der Oberfläche der Sitzfläche 2 angebracht. Das vordere Führungselement 17 ist über einen Querträger 20 mit einem Längsträger 21 verbunden, der mit Abstand parallel zur Ebene des Gehäuse verlaufend an einem Flansch 22 des Sesselgestells 3 mittels einer Schraubverbindung 23 befestigt ist. Das rückwärtige Führungselement 18 ist mit einer Bügelhalterung 24 verbunden, die mittels einer Schraubverbindung 25 an einer Querachse 26 des Sesselgestells 3 befestigt ist. Die Bügelhalterung 24 ist zusätzlich über eine Lasche 27 mittels einer weiteren Schraubverbindung 28 am Sesselgestell 3 befestigt.

Jede Führungsleiste 14, 15 des Gehäuses ist mit einer äußeren Führungsnut 29 und einer inneren Führungsnut 30 versehen, die beide in der vertikalen Gehäuseebene verlaufen. Mittels der äußeren Führungsnuten 29, in welche die Führungselemente 17, 18 eingreifen, ist das Gehäuse an der stationären Führung von einer abgesenkten, in Fig. 4 mit gestrichelten Linien gezeigten Außerbetriebsstellung in eine angehobene, in Fig. 4 mit durchgezogenen Linien dargestellte Betriebsstellung und zurück verschiebbar geführt. Die Schwenkachse 4 weist an ihren beiden Enden je einen Gleitstein 31 auf, der in den inneren Führungsnuten 30 verschiebbar angeordnet ist. Auf diese Weise kann die Schwenkachse 4 mit eingeschwenkten Tischelementen 5 (siehe Fig. 3) innnerhalb des Gehäuses von einer abgesenkten, in Fig. 3 gezeigten und in Fig. 4 mit gestrichelten Linien dargestellten Außerbetriebsstellung in eine angehobene, in den Fig. 1, 2 und in Fig. 4 mit durchgezogenen Linien gezeigte Betriebsstellung und zurück verschoben werden. In der Betriebsstellung sind die Tischelemente 5 sowohl in der benutzerfernen als auch in der benutzernahen Position ausgeschwenkt.

Die Führungsleisten 14, 15 weisen an ihren oberen Enden je einen Kopf 32 auf, der die äußeren und die inneren Führungsnuten 29, 30 unter Bildung je einer äußeren Anschlagfläche 33 bzw. einer inneren Anschlagfläche 34 begrenzt. Mit den äußeren Anschlagsflächen 33 liegt das Gehäuse in seiner abgesenkten Außerbetriebsstellung den oberen Randflächen 19 der Führungselemente 17, 18 als Gegenanschlagsflächen auf. Die Köpfe 32 befinden sich in dieser abgesenkten Außerbetriebsstellung unterhalb der Oberfläche der Sitzfläche 2. In der angehobenen Betriebsstellung ist das Gehäuse mittels eines mit einem Arretiervorsprung 35 in eine Arretieröffnung 36 in der rückwärtigen Führungsleiste 15 eingreifenden Arretierhebels 37 arretiert. Der Arretierhebel 37 ist als Federarm ausgebildet und mittels einer Schraubverbindung 38 an der der rückwärtigen Führungsleiste 15 zugewandten Innenwandung des rückwärtigen Führungselementes 15 befestigt, welches eine Durchtrittsöffnung für den Durchtritt des Arretiervorsprungs 35 aufweist.

Die Schwenkachse 4 ist zusammen mit den eingeschwenkten Tischelementen 5 in der abgesenkten Außerbetriebsstellung am Anschlag 16 abgestützt. In der angehobenen Betriebsstellung dienen die oberen Ränder 40 der Führungsplatten 13 als Auflage für die ausgeschwenkten Tischelemente 5, die auf diese Weise arretiert und durch Reibschluß mit der Auflage in ihrer benutzernahen oder benutzerfernen Stellung gehalten sind. Die oberen Ränder 40 beider Führungsplatten 13 sind über je eine Einlaufschräge 41 für die Tischelemente 5 mit den Führungsplatten-Innenflächen verbunden.

Die Funktion des erfindungsgemäßen Klapptisches ist wie folgt:

Bei Benutzung befindet sich der erfindungsgemäße Klapptisch in seiner angehobenen, in den Fig. 1, 2 und Fig. 4 mit durchgezogenen Linien gezeigten Betriebsstellung. Dabei ist das Gehäuse 13, 14, 15 aus der stationären Führung 17, 18 nach oben ausgefahren und mittels des in die Arretieröffnung 36 federnd eingreifenden Arretiervorsprunges 35 des Arretierhebels 37 arretiert. Ferner ist die Schwenkachse 4 mit den Gleitsteinen 31 bis zur Anlage an die inneren Anschlagsflächen 34 an den oberen Ende der Führungsleisten 14, 15 ausgefahren. Die Arretierung der Schwenkachse 4 erfolgt dabei über die Abstützung der in eine horizontale Ebene ausgeschwenkten Tischelemente 5 an den oberen Rändern 40 der Führungsplatten 13. Die Tischelemente 5 sind in der in Fig. 4 gezeigten Stellung entlang der Schwenkachse 4 in eine benutzerferne Position verschoben, wobei sie etwa zur Hälfte über die Schwenkachse 4 überstehen. In die kleinere Aufnahmeöffnung 8 ist ein Trinkbecher und in die größere Aufnahmeöffnung eine Flasche mit zylindrischem Querschnitt eingesetzt. Zur Abstützung der Flasche ist der Schwenkbügel 10 in die in Fig. 2 und 4 gezeigte ausgeschwenkte Stellung gebracht.

Um nach Benutzung den Klapptisch in seine abgesenkte Außerbetriebsstellung zu überführen, ist es lediglich erforderlich, über eines der beiden Tischelemente 5 beide Elemente 5 von der benutzerfernen Position in die in Fig. 1 gezeigte benutzernahe Position zu verschieben, in der das randäußerste Fingerelement 12 der Innenseite des Kopfes 32 der rückwärtigen Führungsleiste 15 anliegt. Nach Entfernen der Behälter 9 werden die Tischelemente 5 um die Schwenkachse 4 um 90° nach oben eingeschwenkt, bis sich ihre Ränder 6 gegenseitig berühren. Dabei schwenken die Schwenkbügel 10 aus ihrer ausgeschwenkten Stellung in die in Fig. 3 gezeigte eingeschwenkte Stellung. Notfalls wird von Hand nachgeholfen. Nunmehr befinden sich die Tischelemente 5 in einer vertikalen Ebene oberhalb der von den Führungsplatten 13 und den Führungsleisten 14, 15 begrenzten Öffnung. Nun werden die Tischelemente 5 zusammen mit der Schwenkachse 4 einfach über die Einlaufschrägen 41 der Führungsplatten 13 in das Gehäuse ein- und soweit nach unten verschoben, bis die Schwenkachse 4 auf dem Anschlag 16 aufliegt. Während dieses Vorganges sind die Tischelemente 5 über die Schwenkachse 4 und den Gleitsteinen 31 in den inneren Führungsnuten 30 der Führungsleisten 14, 15 geführt. Gleichzeitig liegen die Schwenkbügel 10 an den Führungsplatten-Innenflächen an und ermöglichen somit eine spielfreie Führung und Aufbewahrung der Tischelemente innerhalb des Gehäuses.

Nach Lösen der Arretierung durch Herrausziehen des Arretiervorsprungs 35 aus der Arretieröffnung 36 wird das Gehäuse 13, 14, 15 über die auf seinem Anschlag 16 aufliegende Schwenkachse 4 unter Führung durch die in die äußeren Führungsnuten 29 eingreifenden Führungselemente 17, 18 in die abgesenkte, in Fig. 4 mit gestrichelten Linien gezeigte Außerbetriebsstellung gebracht. In dieser Stellung liegt das Gehäuse 13, 14, 15 mit den äußeren Anschlagsflächen 33 auf den oberen Randflächen 19 der Führungselemente 17, 18 auf. Die Tischelemente 5 stehen über die Köpfe 32 des Gehäuses über, befinden sich jedoch noch unterhalb der Oberfläche der Sitzflächen 2.

Zur Überführung des Klapptisches in seine angehobene Betriebsstellung wird der vorbeschriebene Vorgang in umgekehrter Reihenfolge durchgeführt. Dabei ist eine Betätigung des Arretierhebels 37 nicht erforderlich, da er aufgrund seiner Federwirkung mit seinem Arretiervorsprung 35 selbsttätig in die Arretierstellung 36 einrastet, wenn das Gehäuse die angehobene Betriebsstellung erreicht hat.

**Patentansprüche**

1. Klapptisch für Fahrzeugsessel, insbesondere Omnibussessel,

mit einer seitlich neben dem Sessel am Sesselgestell befestigten Halterung,

mit einem Träger, der in einer im wesentlichen vertikalen Ebene zwischen einer abgesenkten Außerbetriebsstellung und einer angehobenen Betriebsstellung bewegbar an der Halterung angeordnet ist,

und mit einer am Träger bewegbar angeordneten Schwenkachse, auf der wenigstens ein Tischelement zwischen einer eingeschwenkten und einer ausgeschwenkten Stellung schwenkbar gelagert ist,

**dadurch gekennzeichnet, daß**

die Halterung als eine stationäre vertikale Führung (17, 18) und

der Träger als ein das Tischelement (5) zumindest seitlich umfassender, in der Führung (17, 18) zwischen der Betriebs- und der Außerbetriebsstellung teleskopisch verschiebbarer Rahmen (13, 14, 15) ausgebildet ist,

in welchem die Schwenkachse (4), zusammen mit dem Tischelement (5), im wesentlichen horizontal verlaufend zwischen einer abgesenkten Außerbetriebsstellung und einer angehobenen Betriebsstellung längs einer im wesentlichen vertikalen Ebene verschiebbar geführt ist.

2. Klapptisch nach Anspruch 1, **dadurch gekenn-**

**zeichnet,** daß der Rahmen (13, 14, 15) als ein zwei Führungsplatten (13) und zwei Führungsleisten (14, 15) umfassendes Gehäuse ausgebildet ist.

3. Klapptisch nach Anspruch 1 oder 2, **dadurch gekennzeichnet,** daß die stationäre Führung (17, 18) zwei Führungselemente (17, 18) darrstellt, die jeweils in eine äußere Führungsnut (29) in den Führungsleisten (14, 15) eingreifen.

4. Klapptisch nach Anspruch 2 oder 3, **dadurch gekennzeichnet,** daß die Führungsleisten (14, 15) je eine innere Führungsnut (30) zur Führung je eines, an je einem Ende der Schwenkachse (4) befestigten Gleitsteins (31) aufweisen.

5. Klapptisch nach wenigstens einem der vorhergehenden Ansprüche, **dadurch gekennzeichnet,** daß die Führungsleisten (14, 15) an ihren oberen Enden je einen Kopf (32) aufweisen, der die inneren und die äußeren Führungsnuten (30, 29) unter Bildung einer inneren bzw. äußeren Anschlagsfläche (34, 33) für die Schwenkachse (4) bzw. für das Gehäuse (13, 14, 15) begrenzt.

6. Klapptisch nach wenigstens einem der vorhergehenden Ansprüche, **dadurch gekennzeichnet,** daß die oberen Randflächen (19) der Führungselemente (17, 18) als Gegenanschlagsflächen für die äußeren Anschlagsflächen (33) ausgebildet sind.

7. Klapptisch nach wenigstens einem der vorhergehenden Ansprüche, **dadurch gekennzeichnet,** daß am unteren Ende der Führungsplatten (13) ein Anschlag (16) für die Schwenkachse (4) ausgebildet ist.

8. Klapptisch nach wenigstens einem der vorhergehenden Ansprüche, **dadurch gekennzeichnet,** daß ein Bügel (10) zur spielfreien Führung des Tischelementes (5) an den Führungsplattten (13) vorgesehen ist.

9. Klapptisch nach Anspruch 8, **dadurch gekennzeichnet,** daß der Bügel (10) an dem Tischelement (5) befestigt ist.

10. Klapptisch nach wenigstens einem der vorhergehenden Ansprüche, **dadurch gekennzeichnet,** daß das Tischelement (5) wenigstens eine durchgehende Aufnahmeöffnung (8) zur Aufnahme eines Behälters (9) aufweist.

11. Klapptisch nach wenigstens einem der Ansprüche 8 bis 10, **dadurch gekennzeichnet,** daß der Bügel (10) als Schwenkbügel (19) ausgebildet ist, der von einer dem Tischelement (5) nahen, eingeschwenkten Stellung in eine ausgeschwenkte Stellung unterhalb der Aufnahmeöffnung (8) zum Abstützen des Behälters (9) verschwenkbar ist.

12. Klapptisch nach wenigstens einem der vorhergehenden Ansprüche, **dadurch gekennzeichnet,** daß das Tischelement (5) auf der Schwenkachse (4) verschiebbar angeordnet ist.

13. Klapptisch nach Anspruch 12, **dadurch gekennzeichnet,** daß das Tischelement (5) von einer benutzernahen der Rücklehne (1) des Sessels zugewandten Position in eine benutzerfernere Position verschiebbar ist.

14. Klapptisch nach wenigstens einem der vorhergehenden Ansprüche, **dadurch gekennzeichnet,** daß das Tischelement (5) mittels einer Lagerbuchse (12) an der Schwenkachse (4) gelagert ist.

15. Klapptisch nach Anspruch 14, **dadurch gekennzeichnet,** daß die Lagerbuchse (12) auf ihrer Gesamtlänge einen Schlitz (11) aufweist, dessen Breite etwa kleiner ist als der Durchmesser der Schwenkachse (4).

16. Klapptisch nach wenigstens einem der vorhergehenden Ansprüche, **dadurch gekennzeichnet,** daß die Lagerbuchse (12) elastische ausgebildet ist.

17. Klapptisch nach wenigstens einem der vorhergehenden Ansprüche, **dadurch gekennzeichnet,** daß zwei Tischelemente (5) an der Schwenkachse (4) gelagert sind.

18. Klapptisch nach wenigstens einem der vorhergehenden Ansprüche, **dadurch gekennzeichnet,** daß die Lagerbuchsen (12) beider Tischelemente (5) in Form mehrerer Fingerelemente (12) ausgebildet sind, die abwechselnd nebeneinander auf der Schwenkachse (4) angeordnet sind.

19. Klapptisch nach Anspruch 18, **dadurch gekennzeichnet,** daß die Breite der Fingerelemente (12) beider Tischelemente (5), gemessen in Längsrichtung der Schwenkachse (4), im wesentlichen deren halben Länge entspricht.

20. Klapptisch nach wenigstens einem der vorhergehenden Ansprüche, **dadurch gekennzeichnet,** daß der jeweils obere Rand (40) der Führungsplatten (13) als Auflager für die ausgeschwenkten Tischelemente (5) ausgebildet ist.

21. Klapptisch nach Anspruch 20, **dadurch gekenn-**

zeichnet, daß die oberen Ränder (40) der Führungsplatten (13) über je eine Einlaufschräge (41) für die Tischelemente (5) mit der Führungsplatten-Innenfläche verbunden sind.

22. Klapptisch nach wenigstens einem der vorhergehenden Ansprüche, **dadurch gekennzeichnet,** daß die stationäre Führung (17, 18) in Höhe der Sitzfläche (2) des Sessels angeordnet ist.

23. Klapptisch nach wenigstens einem der vorhergehenden Ansprüche, **dadurch gekennzeichnet,** daß das Gehäuse (13, 14, 15) in der angehobenen Betriebsstellung mittels eines in eine Arretieröffnung (36) in einer Führungsleiste (15) eingreifenden Arretierhebels (37) arretiert ist.

24. Klapptisch nach Anspruch 23, **dadurch gekennzeichnet,** daß der Arretierhebel (37) an dem der Rückenlehne (1) des Sessels zugewandten rückwärtigen Führungselement (18) angebracht ist.

25. Klapptisch nach wenigstens einem der vorhergehenden Ansprüche, **dadurch gekennzeichnet,** daß das rückwärtige Führungselement (18) mittels einer Bügelhalterung (24) an einer Querachse (26) des Sesselgestells (3) befestigt ist.

26. Klapptisch nach wenigstens einem der vorhergehenden Ansprüche, **dadurch gekennzeichnet,** daß das der Rückenlehne (1) des Sessels abgewandte vordere Führungselement (17) mittels einer Trägeranordnung (20, 21) an einem Flansch (22) des Sesselgestells (3) befestigt ist.

**Claims**

1: Folding table for vehicle seats, in particular coach seats,
-with a mount which is attached laterally to the seat at the chair frame;
-with a carrier, which is arranged at the mount to be displaceable in a substantially vertical plane between a lowered inoperative position and a raised operative position; and
-with a pivot axis, which is displaceably arranged at the carrier and to which at least one table element is mounted so as to be pivotable between a pivoted-in and a pivoted-out position, **characterised in that** the mount is constructed to be a stationary vertical guide (17, 18), and the carrier is constructed as a frame (13, 14, 15) which surrounds the table element (5) at least laterally and which is telescopically displaceable in the guide (17, 18) between the operative position and the inoperative position, in which frame the pivot axis (4), together with the table element (5), extending substantially horizontally, is guided to be displaceable between a lowered inoperative position and a raised operative position along a substantially vertical plane.

2: Folding table according to claim 1, **characterised in that** the frame (13, 14, 15) is constructed to be a housing having two guide plates (13) and two guide rails (14, 15).

3: Folding table according to claim 1 or 2, **characterised in that** the stationary guide (17, 18) represents two guide elements (17, 18) which engage in a respective outer guide groove (29) in the guide rails (14, 15)

4: Folding table according to claim 2 or 3, **characterised in that** the guide rails (14, 15) have a respective inner guide groove (3Ø) for guiding a respective guide block (31), which is attached at a respective end of the pivot axis (4).

5: Folding table according to at least one of the above claims, **characterised in that** the guide rails (14, 15) have at their upper ends a respective head (32) which defines the inner and the outer guide grooves (3Ø, 29) whilst forming an inner or outer stop (34, 33) for the pivot axis (4) or for the housing (13, 14, 15) respectively.

6: Folding table according to at least one of the above claims, **characterised in that** the upper edge surfaces (19) of the guide elements (17, 18) are constructed as counter stops for the outer stops (33).

7: Folding table according to at least one of the above claims, **characterised in that** a stop (16) for the pivot axis (4) is arranged at the lower end of the guide plates (13).

8: Folding table according to at least one of the above claims, **characterised in that** a yoke (1Ø) is provided for play-free guiding of the table elements (5) at the guide plates (13).

9: Folding table according to claim 8, **characterized in that** the yoke (1Ø) is attached to the table element (5)

1Ø: Folding table according to at least one of the above claims, **characterized in that** the table element (5) has at least one open accommodation hole (8) for holding a container (9).

11: Folding table according to at least one of claims 8 to 1Ø, **characterized in that** the yoke (1Ø) is arranged to be a pivot yoke (19) which is pivotable from a pivoted-in position near the table element (5) into a pivoted-out position underneath the accommodation hole (8) for supporting the container (9).

12: Folding table according to at least one of the above claims, **characterised in that** the table element (5) is displaceably arranged on the pivot axis (4).

13: Folding table according to claim 12, **characterized in that** the table element (5) is displaceable from a position near the user and facing towards the back rest (1) of the seat into a position remote from the user.

14: Folding table according to at least one of the above claims, **characterized in that** the table element (5) is mounted on the pivot axis (4) by means of a bearing bush (12).

15: Folding table according to claim 14, **characterized in that** the bearing bush (12) has a slot (11) along its entire length, the breadth of which slot is somewhat smaller than the diameter of the pivot axis (4).

16: Folding table according to at least one of the above claims, **characterized in that** the mounting bush (12) is arranged to be elastic.

17: Folding table according to at least one of the above claims, **characterized in that** two table elements (5) are mounted on the pivot axis (4).

18: Folding table according to at least one of the above claims, **characterized in that** the mounting bushes (12) of both table elements (5) are arranged in the shape of several finger elements (12), arranged alternately next to each other on the pivot axis (4).

19: Folding table according to claim 18, **characterised in that** the breadth of the finger elements (12) of both table elements (5), measured in the longitudinal direction of the pivot axis (4), corresponds with substantially half their length.

2Ø: Folding table according to at least one of the above claims, **characterised in that** the respective upper edge (4Ø) of the guide plates (13) is arranged to be an abutment for the pivoted-out table elements (5).

21: Folding table according to claim 2Ø, **characterised in that** the upper edges (4Ø) of the guide plates (13) are connected via a respective slanted inlet (41) for the table elements (5) to the inside surface of the guide plates.

22: Folding table according to at least one of the above claims, **characterised in that** the stationary guide (17, 18) is arranged at the level of the seat surface (2) of the chair.

23: Folding table according to at least one of the above claims, **characterized in that** the housing (13, 14, 15) is arrested in the raised operative position by means of an arresting lever (37) which engages an arresting aperture (36) in a guide rail (15).

24: Folding table according to claim 23, **characterised in that** the arresting lever (37) is accommodated at the rearward guide element (18) facing towards the back rest (1) of the chair.

25: Folding table according to at least one of the above claims, **characterised in that** the rearward guide element (18) is mounted on a transverse axis (26) of the chair frame (3) by means of a yoke support (24).

26: Folding table according to at least one of the above claims, **characterised in that** the front guide element (17), which faces away from the back rest (1) of the chair, is mounted to a flange (22) of the chair frame (3) by means of a support arrangement (2Ø, 21).

## Revendications

1. - Table pliante pour fauteuils de véhicules, en particulier pour fauteuils d'autocars, comprenant une fixation montée latéralement à côté du fauteuil sur le cadre du fauteuil, un support monté de manière mobile sur la fixation, dans un plan sensiblement vertical, entre une position abaissée de non-utilisation et une position relevée de service, et un axe de pivotement disposé de manière mobile sur le support et sur lequel est monté au moins un élément de table de façon à pouvoir pivoter entre une position rentrée et une position sortie, **caractérisée en ce** que la fixation est réalisée sous la forme d'un guidage stationnaire vertical (17,18) et le support sous la forme d'un cadre (13,14,15) qui entoure l'élément de table (5) au moins latéralement et peut être déplacé de manière télescopique dans le guidage (17, 18) entre la position de service et la position de non-utilisation et dans lequel l'axe de pivotement (4), conjointement avec les éléments de table (5), est guidé sensiblement horizontalement, le long d'un plan sensiblement vertical, entre une position abaissée de non-utilisation et une position relevée de service.

2. - Table pliante selon la revendication 1, caractérisée en ce que le cadre (13, 14, 15) est conformé en un boitier comprenant deux plaques de guidage (13) et deux baguettes de guidage (14, 15).

3. - Table pliante selon l'une des revendications 1 ou 2, caractérisée en ce que le guidage stationnaire (17, 18) représente deux éléments de guidage (17, 18) qui s'engagent respectivement dans une rainure de guidage extérieure (29) ménagée dans les baguettes de guidage (14, 15).

4. - Table pliante selon l'une des revendications 2 ou 3, caractérisée en ce que les baguettes de guidage (14, 15) comprennent chacune une rainure de guidage intérieure (30) pour le guidage de respectivement un coulisseau (31) fixé sur chaque extrémité de l'axe de pivotement (4).

5. - Table pliante selon l'une quelconque des revendications précédentes, caractérisée en ce que les baguettes de guidage (14, 15) comportent chacune à leur extrémité supérieure une tête (32) qui délimite les rainures de guidage intérieures et extérieures (30, 29) en formant une surface d'arrêt intérieure et respectivement extérieure (34, 33) pour l'axe de pivotement (4) et respectivement pour le boîtier (13, 14, 15).

6. - Table pliante selon l'une quelconque des revendications précédentes, caractérisée en ce que les bords supérieurs (19) des éléments de guidages (17, 18) sont conformés en contre-butées pour les surfaces d'arrêt extérieures (33).

7. - Table pliante selon l'une quelconque des revendications précédentes, caractérisée en ce qu'à l'extrémité inférieure des plaques de guidage (13) est conformée une butée (16) pour l'axe de pivotement (4).

8. - Table pliante selon l'une quelconque des revendications précédentes, caractérisée en ce qu'un étrier (10) est prévu pour le guidage sans jeu de l'élément de table (5) sur les plaques de guidage (13).

9. - Table pliante selon la revendication 8, caractérisée en ce que l'étrier (10) est fixé sur l'élément de table (5).

10. - Table pliante selon l'une quelconque des revendications précédentes, caractérisée en ce que l'élément de table (5) comprend au moins une ouverture continue (8) pour la réception d'un récipient (9).

11. - Table pliante selon l'une quelconque des revendications 8 à 10, caractérisée en ce que l'étrier (10) est conformé en étrier pivotant (19) qui peut être pivoté d'une position repliée proche de l'élément de table (5) dans une position dépliée au-dessous de l'ouverture de réception (8) pour soutenir le récipient (9).

12. - Table pliante selon l'une quelconque des revendications précédentes, caractérisée en ce que l'élément de table (5) est monté de manière mobile sur l'axe de pivotement (4).

13. - Table pliante selon la revendication 12, caractérisée en ce que l'élément de table (5) peut être amené d'une position proche de l'utilisateur dirigée vers le dossier (1) du fauteuil à une positon éloignée de l'utilisateur.

14. - Table pliante selon l'une quelconque des revendications précédentes, caractérisée en ce que l'élément de table (5) est monte sur l'axe de pivotement (4) au moyen d'un coussinet (12).

15. - Table pliante selon la revendication 14, caractérisée en ce que le coussinet (12) présente sur toute sa longueur une fente (11) dont la largeur est légèrement inférieure au diamètre de l'axe de pivotement (4).

16. - Table pliante selon l'une quelconque des revendications précédentes, caractérisée en ce que le coussinet (12) est élastique.

17. - Table pliante selon l'une quelconque des revendications précédentes, caractérisée en ce que deux éléments de table (5) sont montés sur l'axe de pivotement (4).

18. - Table pliante selon l'une quelconque des revendications précédentes, caractérisée en ce que les coussinets (12) des deux éléments de table (5) sont conformés en plusieurs éléments de doigts (12) qui sont juxtaposés alternativement sur l'axe de pivotement (4).

19. - Table pliante selon la revendication 18, caractérisée en ce que la largeur des éléments de doigts (12) des deux éléments de table (5), mesurée dans le sens longitudinal de l'axe de pivotement (4), correspond sensiblement à la moitié de la longueur de celui-ci.

20. - Table pliante selon l'une quelconque des revendications précédentes, caractérisée en ce que respectivement le bord supérieur (40) des plaques de guidage (13) est conformé en appui pour les éléments de table (5) dépliés.

21. - Table pliante selon la revendication 20, caractérisée en ce que les bords supérieurs (40) des plaques de guidage (13) sont relies par respectivement une rampe d'entrée (41) pour les éléments de table (5) à la face intérieure des plaques de guidage.

22. - Table pliante selon l'une quelconque des revendications précédentes, caractérisée en ce que le guidage stationnaire (17, 18) est disposé au niveau de la surface de siège (2) du fauteuil.

23. - Table pliante selon l'une quelconque des revendications précédentes, caractérisée en ce que le boîtier (13, 14, 15) est bloqué dans la position relevée de service au moyen d'un levier d'arrêt (37) gui s'engage dans une ouverture d'arrêt (36) ménagée dans une baguette de guidage (15).

24. Table pliante selon la revendication 23, caractérisée en ce que le levier d'arrêt (37) est monté sur l'élément de guidage postérieur (18) dirigé vers le dossier (1) du fauteuil.

25. - Table pliante selon l'une quelconque des revendications précédentes, caractérisée en ce que l'élément de guidage postérieur (18) est fixé au moyen d'un étrier de fixation (24) sur un axe transversal (26) du cadre (3) du fauteuil.

26. - Table pliante selon l'une quelconque des revendications précédentes, caractérisée en ce que l'élément de guidage antérieur (17) opposé au dossier (1) du fauteuil est fixé au moyen d'un dispositif de support (20, 21) sur une bride (22) du cadre (3) du fauteuil.

FIG.1

FIG.2

EP 0 350 897 B1

FIG.3

FIG.4